# FASCICULE DE BREVET EUROPEEN

(11) **EP 0 877 888 B1**
(45) Date de publication et mention de la délivrance du brevet: **31.10.2001**
(21) Numéro de dépôt: 97902414.8
(22) Date de dépôt: 31.01.1997
(51) Int. Cl.: F16L 11/08, F16L 11/16

(54) **CONDUITE FLEXIBLE A FLUAGE LIMITE DE LA GAINE D'ETANCHEITE INTERNE DANS DES ARMURES**
FLEXIBLE ROHRLEITUNG MIT VERSTÄRKUNGSSCHICHTEN UND EINER KRIECHBEGRENZTEN INNENDICHTSCHICHT
FLEXIBLE PIPE IN WHICH THE CREEP OF A SEALING LINER INTO THE REINFORCEMENT IS RESTRICTED

(30) Priorité: 02.02.1996 FR 9601290
(43) Date de publication de la demande: 18.11.1998
(73) Titulaire: COFLEXIP, 75116 Paris (FR)
(72) Inventeur: LE NOUVEAU, Joel, F-76480 Yainville (FR)
(74) Mandataire: Levy, David
(86) Numéro de dépôt international: FR9700190
(87) Numéro de publication internationale: WO9728393

(56) Documents cités:
- EP-A- 0 596 147
- FR-A- 1 075 332
- FR-A- 1 394 036
- FR-A- 2 699 979
- US-A- 3 905 398
- US-A- 4 679 599

## Description

La présente invention concerne une conduite flexible pour véhiculer sur de grandes distances, un fluide sous haute pression et dont la température peut être élevée, tel qu'un gaz, du pétrole, de l'eau ou d'autres fluides.

Une conduite flexible comprend généralement de l'intérieur vers l'extérieur,
- une gaine d'étanchéité interne, réalisée en une matière plastique résistant plus ou moins à l'action chimique du fluide à transporter,
- une première armure résistant principalement à la pression développée par le fluide dans la gaine d'étanchéité interne, ladite première armure étant appelée généralement voûte de pression,
- éventuellement une deuxième armure résistant principalement à la traction produite notamment par la pression du fluide, lorsqu'elle est élevée,
- une gaine de protection externe réalisée également en une matière plastique.

Dans certains cas, la conduite flexible comprend une armure, disposée au-dessus de la gaine d'étanchéité interne, qui résiste à la fois aux effets de traction dirigés longitudinalement suivant l'axe de la conduite flexible et à la composante circonférentielle de la pression interne du fluide.

La voûte de pression est constituée par au moins un enroulement à spires non jointives pour doter la conduite flexible d'une certaine flexibilité. Par spires non jointives, on entend des spires entre lesquelles est ménagé un certain espace.

Sous l'effet de la pression interne et/ou de la température développées par le fluide, la gaine d'étanchéité interne qui est relativement souple, est plaquée contre la voûte de pression et a tendance à pénétrer dans un ou plusieurs des espaces entre spires. La tendance à la pénétration ou fluage de la gaine d'étanchéité interne augmente avec la durée et/ou les conditions sévères d'utilisation de la conduite flexible, par exemple lorsque le fluide à véhiculer circule sous forte pression (plusieurs centaines de bars), et forte température, (supérieure à 100°C), une température élevée diminuant généralement la rigidité de la gaine d'étanchéité interne. Lorsque la gaine d'étanchéité pénètre progressivement dans lesdits espaces, il se produit soit des craquelures affectant ainsi la fonction d'étanchéité de la gaine interne, soit même une ou plusieurs ruptures locales de la gaine interne, la conséquence de tels incidents étant une intrusion du fluide à l'extérieur de la gaine interne qui n'assure plus l'étanchéité requise.

Pour limiter ou tenter d'empêcher le fluage de la gaine interne dans les espaces entre spires de la voûte de pression, plusieurs solutions ont été proposées et/ou adoptées.

Une solution, la plus simple, consiste à choisir un matériau et une forte épaisseur pour la gaine interne, de manière à présenter des performances mécaniques et une résistance chimique plus élevées. L'inconvénient de cette solution est double : plus grande difficulté à réaliser la conduite flexible en raison des dimensions élevées de la gaine interne et un coût de fabrication très élevé.

Une autre solution consiste à utiliser un matériau plus noble pour conserver une épaisseur acceptable à la gaine interne. C'est ainsi qu'au lieu d'un polyéthylène pour réaliser la gaine interne, on a utilisé un polyamide dont le coût est très nettement plus élevé que celui du polyéthylène.

D'autres solutions qui parfois ne sont pas directement concernées par l'objet de la présente invention, sont proposées et décrites dans WO-A-82/01159, US-A-3 880 195, EP-A-0 166 385, EP-A-0 147 288, FR-A-2 465 416, FR-A-2 417 707.

L'art antérieur le plus proche de l'invention est constitué par les documents US-A-3 729 028 et FR-A-85 17 497 (= FR-A-2 590 646).

Dans le document US-A-3 729 028, la gaine d'étanchéité interne comprend un enroulement d'une bande mais ni la structure ni les caractéristiques mécaniques de la bande hormis le fait qu'elle est de section rectangulaire, ne sont décrites ou même suggérées.

Dans le document FR-A-85 17 497, il est utilisé, comme dans la présente invention, une bande intermédiaire susceptible de limiter le fluage de la gaine d'étanchéité interne entre les spires de l'armure résistant à la pression interne. Selon ce document, la bande intermédiaire qui peut être enroulée autour de la gaine interne suivant la direction d'enroulement des spires de l'armure de pression ou suivant une direction contraire, doit présenter un module d'élasticité élevé dans la direction d'enroulement. Pour cela et dans le but d'obtenir des résultats satisfaisants, il est conseillé d'utiliser, pour la confection du ruban, des fibres sensiblement unidirectionnelles s'étendant dans la direction d'enroulement et enrobées dans une résine synthétique et de préférence dans une résine au moins en partie thermoplastique, que l'on peut éventuellement fixer par collage ou thermofusion. Le module transverse de la bande est faible de manière à maintenir la flexibilité de la conduite. Dans les exemples illustrés, le module d'élasticité dans la direction d'enroulement doit être égal à au moins 10 000 MPa, les fibres longitudinales pouvant être constituées par des fibres de verre E, R ou S, des fibres de carbone, de carbure de silicium, de polyéthylène de haute masse moléculaire, de polyamide aromatique. Toutefois, aucune indication n'est donnée quant à la structure de la bande, si ce n'est qu'elle comprend des fibres longitudinales à fort module d'élasticité et que la bande est enroulée sous faible tension, par exemple de l'ordre de 30 DaN.

Or, seules les fibres longitudinales opposent une résistance à la pression interne. Par contre, aucune résistance n'est opposée à la pression interne entre les fibres longitudinales. Dans ces conditions, la gaine d'étanchéité interne à tendance à déformer la bande intermédiaire et donc à fluer entre les spires de la voûte de pression et ce, en raison de la faible résistance opposée par les fils transverses. Pour remédier éventuellement à un tel inconvénient, il est donc recommandé d'enrouler plusieurs bandes intermédiaires, superposées les unes sur les autres et de préférence avec des enroulements alternés, ce qui augmente non seulement le poids total de la conduite flexible mais également obère de façon prohibitive le coût de fabrication. En effet, il sera nécessaire de mettre en oeuvre autant de chalumeaux à flamme non oxydante qu'il y a de bandes superposées pour provoquer une fusion superficielle du polyéthylène au moment de la mise en contact de chaque bande intermédiaire avec la gaine interne d'une part, et d'utiliser une plus grande quantité de fibres de carbone et de polyamide aromatique d'autre part. De plus, les contraintes d'enroulement avec des angles spécifiques suivant l'application envisagée ne font qu'augmenter davantage le coût de fabrication, sans tenir compte des autres produits secondaires nécessaires à la fabrication de la bande intermédiaire, comme par exemple l'enrobage des fibres longitudinales dans une résine pour leur conférer la cohésion requise.

La présente invention a pour but de proposer une conduite flexible pourvue d'une bande intermédiaire qui empêche le fluage de la gaine d'étanchéité interne entre les spires de l'enroulement de la voûte de pression.

Un objet de la présente invention est une conduite flexible qui est caractérisée par le fait qu'elle comprend une bande intermédiaire qui présente un faible module d'élasticité dans la direction d'enroulement autour de la gaine d'étanchéité interne et un module d'élasticité et une résistance élevés dans la direction transverse à ladite direction d'enroulement des spires.

Un avantage de la présente invention réside dans le fait que la bande intermédiaire anti-fluage résiste fortement à la pression interne du fluide en limitant ainsi considérablement une pénétration ou fluage de la matière constituant la gaine d'étanchéité interne et ce, pour la raison essentielle que seuls les endroits de la bande qui présentent la plus forte résistance mécanique s'opposent à ladite pression interne.

Selon une autre caractéristique, la bande est constituée par un entrecroisement de fils longitudinaux et de fils transverses, les fils transverses présentant un module d'élasticité et une résistance mécanique élevés. La bande est, de préférence, du type tissé et elle est sèche dans tous les cas, c'est-à-dire qu'elle ne comprend pas ou presque pas de matière de liage autre que celle nécessaire à sa fabrication et sa manipulation et habituellement utilisée dans la fabrication de telles bandes. De ce fait, il n'est plus nécessaire de prévoir des étapes de rigidification et/ou de fixation de certains de ses composants, comme cela est le cas pour les bandes intermédiaires de l'art antérieur.

De plus, les fils constitutifs de la bande sont des mèches, chaque mèche comprenant des filaments en nombre et de nature appropriés pour leur conférer les propriétés mécaniques souhaitées. Dans une forme de réalisation de la bande, les fils transverses sont inclinés par rapport aux fils longitudinaux d'un angle d'environ 55° qui est l'angle d'enroulement des fils d'armure aboutissant à une conduite flexible dimensionnellement stable sous l'effet de la pression interne.

Lorsque lesdits fils de trame sont enroulés à cet angle d'équilibre d'environ 55°, lesdits fils ne bougent pratiquement pas et ne produisent, en conséquence, aucun frottement sur la gaine interne ni sur la voûte de pression.

De plus, les fils de trame étant transverses aux déjoints des spires de la voûte de pression, forment une "poutre" courte qui travaille en flexion et qui s'oppose efficacement à la pénétration de la gaine d'étanchéité.

D'autres caractéristiques et avantages apparaîtront à la lecture de la description de plusieurs modes de réalisation de l'invention, ainsi que des dessins annexés sur lesquels :

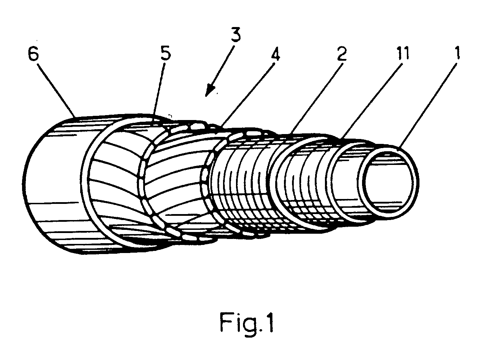

la figure 1 est une vue partielle en perspective d'une conduite flexible selon l'invention.
La figure 2 est un exemple d'une section de deux spires non jointives de la voûte de pression de la conduite représentée sur la figure 1.
La figure 3 est une vue partielle en plan de la bande intermédiaire selon un premier mode de réalisation.
La figure 4 est une représentation partielle, très schématique et non à l'échelle d'une section longitudinale de la conduite de la figure 1.

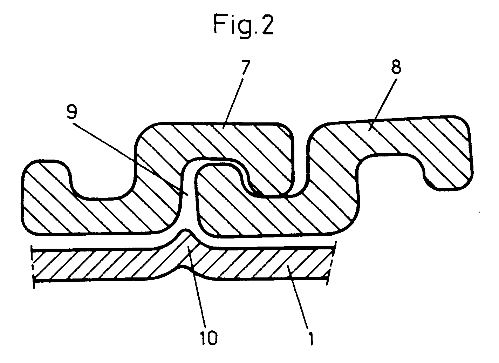

Une conduite flexible du type smooth-bore comprend généralement de l'intérieur vers l'extérieur une gaine d'étanchéité interne 1, du type polymérique, une armure résistant à la pression ou voûte de pression 2, constituée par un enroulement de fils de section appropriée, par exemple en forme de Z et appelé fil Zeta tel que représenté sur la figure 2 ou encore en forme de U ou de T, une armure 3 résistant à la traction axiale dans le sens longitudinal de la conduite flexible, ladite armure étant habituellement constituée par une ou plusieurs paires de nappes d'enroulement 4,5 dont les directions d'enroulement sont contraires l'une de l'autre et inclinées d'un angle inférieur à 55°, et une gaine d'étanchéité externe 6, de type polymérique. Dans certaines applications, les diverses armures ou nappes d'enroulement sont séparées les unes des autres par une couche en textile, en matière plastique de même nature ou de nature différente que la gaine d'étanchéité externe 6.

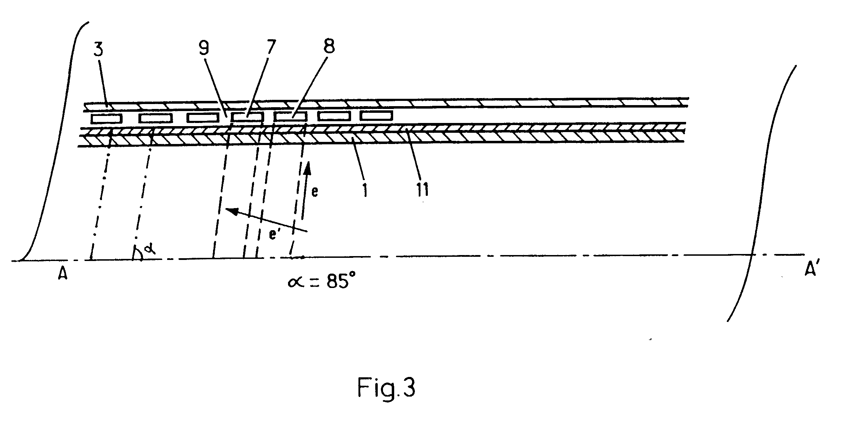

La voûte de pression 2 est constituée (figure 3) par au moins un enroulement suivant une direction e, à spires 7, 8 non jointives si bien qu'un espace 9 est ménagé entre les deux spires consécutives 7, 8. Lors d'une mise en pression de la conduite flexible produite par le fluide circulant à une température plus ou moins élevée dans ladite conduite, la gaine d'étanchéité interne 1 a tendance à se déformer et pénétrer localemement, au droit desdits espaces 9. Une telle pénétration ou fluage est matérialisée sur la figure 2 par une ondulation 10 dans l'épaisseur de la gaine interne 1. Les déformations progressives de la gaine d'étanchéité interne 1 dans les espaces 9 conduisent à des craquelures et même à une ou des ruptures locales entraînant une perte d'étanchéité et ce, d'autant plus importantes que les espaces 9 et la diamètre de la conduite sont élevés. Ces phénomènes de fissuration et/ou de fragilisation de la gaine interne sont amplifiés dans les conduites dites dynamiques par opposition aux conduites statiques.

Selon la présente invention, une bande intermédiaire anti-fluage 11 est interposée entre la gaine d'étanchéité interne 1 et la voûte de pression 2. La bande 11 peut être enroulée dans une première direction, sensiblement dans la même direction e que l'enroulement de la voûte de pression 2 mais en faisant un angle α voisin de 90° et de préférence entre 80 et 85°, par rapport à l'axe de symétrie AA' de la conduite flexible (figure 3). L'enroulement de la bande 11 peut également être contraire à ladite première direction, à spires jointives ou à spires chevauchantes.

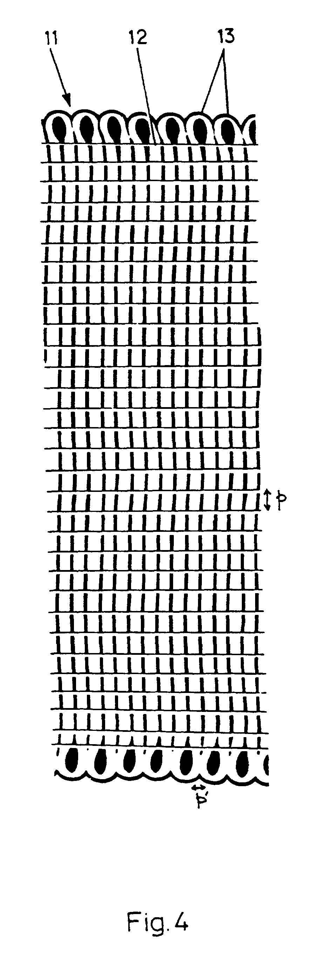

La bande 11 est constituée (figure 4) par un entrecroisement de fils de chaîne 12 longitudinaux et de fils de trame 13 dont la direction e' est transverse à la direction e d'enroulement des spires 7,8, la bande 11 étant réalisée avec un tissage lâche. Les fils de chaîne 12 présentent un module d'élasticité faible, comparé à celui des fils de trame 13. A titre d'exemple, le module d'élasticité des fils de chaîne 12 est inférieur ou égal à 10 000 MPa alors que le module d'élasticité des fils de trame est au moins égal à 50 000 MPa. De même, le grammage des fils de chaîne 12 et des fils de trame 13 est respectivement compris entre 40 et 100 g/m² et entre 100 et 300 g/m², ce qui conduit à une résistance mécanique de la bande comprise entre 100 et 300 DaN/5cm dans le sens des fils de chaîne 12, et supérieure à 1000 DaN/5cm dans le sens des fils de trame 13.

Le tissage lâche de la bande 11 est réalisé de sorte que le pas p entre fils de chaîne 12 soit d'environ 3 mm alors que la pas p' entre fils de trame 13 est environ de 1 mm.

Bien évidemment, d'autres modes de fabrication de la bande 11 peuvent être envisagés tel qu'un tricot. Il en est de même des orientations respectives des fils de chaîne et des fils de trame. La bande 11 de la figure 4 comprend des fils de chaîne 12 parfaitement rectilignes, dirigés dans la direction d'enroulement de la bande et sensiblement perpendiculaires aux fils de trame 13. On peut également réaliser la bande 11 de telle sorte que les fils de trame 13 soient inclinés en faisant un angle d'environ 55° avec les fils de chaîne 12.

De préférence, les fils de chaîne 12 sont des mèches filamentaires en polypropylène (PP), polyéthylène, polyester, qui sont torsadées, alors que les fils de trame 13 peuvent être également des mèches filamentaires non torsadées, en polyamide, carbone, titane etc... et dont les monofilaments constitutifs se répartissent de manière plus uniforme entre les fils de chaîne. Une telle structure présente plusieurs avantages. Le premier est d'éliminer ou de diminuer les trous dans la bande 11 en conférant à cette dernière un aspect plus uniforme et compact de sorte que la pression interne s'exerce sur des fils de trame larges comparés aux fils de chaîne minces. Le deuxième avantage est de pouvoir n'utiliser, à la limite, qu'une seule épaisseur de bande intermédiaire 11.

Lorsqu'on procède à l'enroulement de la bande 11 autour de la gaine d'étanchéité interne 1, on peut le réaliser à spires jointives ou à spires en recouvrement, le taux de recouvrement étant compris entre 10 et 50 %. De même, pour obtenir une meilleure répartition de la pression interne sur la bande intermédiaire 11 et éliminer le risque d'une pression dans les trous de ladite bande, on préfère superposer deux bandes 11 l'une sur l'autre, dans le même sens ou en sens inverses. Cela est d'autant plus possible que la bande 11 selon l'invention présente une faible épaisseur comprise entre 50 et 70/100 mm.

Il est à noter que la bande 11 selon l'invention est enroulée à l'état sec au moment de son enroulement autour de la gaine d'étanchéité même si une faible quantité de matière de liage est utilisée pour sa fabrication, matière de liage qui est nécessaire pour tenir entre eux, temporairement, les fils de chaîne et les fils de trame au cours du tissage par exemple.

De préférence, la largeur de la bande intermédiaire est au moins supérieure à l'espacement entre spires de la voûte de pression. Avantageusement et dans une forme préférée de réalisation, la largeur de la bande est égale à au moins deux fois ledit espacement.

## Revendications

1. Conduite flexible utilisable pour le transport de fluides, du type comprenant au moins une gaine d'étanchéité interne (1) ; un ensemble (3) d'armures externes de résistance à des contraintes physico-chimiques appliquées à ladite conduite flexible, ledit ensemble comportant notamment une armure de résistance (2) à la pression du fluide à transporter, ladite armure de résistance (2) à la pression étant constituée par un enroulement à spires non jointives (7,8), suivant une direction donnée (e) autour de ladite gaine d'étanchéité interne (1) ; une bande intermédiaire (11) disposée entre l'armure de résistance (2) à la pression et la gaine d'étanchéité interne (1) et enroulée autour de ladite gaine d'étanchéité interne suivant une direction parallèle ou contraire à la direction d'enroulement (e) des spires de l'armure de résistance à la pression, **caractérisée en ce que** la bande intermédiaire (11) présente un module d'élasticité faible dans la direction d'enroulement (e) autour de ladite gaine d'étanchéité interne et une résistance et un module d'élasticité élevés dans la direction transverse (e') à la direction d'enroulement desdites spires.

2. Conduite flexible selon la revendication 1,
**caractérisée en ce que** la bande intermédiaire (11) est constituée par un entrecroisement de fils (12, 13) dont certains (12) sont longitudinaux et disposés dans la direction d'enroulement (e) de ladite bande, les fils transverses (13) présentant une forte résistance mécanique supérieure à 1000 DaN/cm.

3. Conduite flexible selon la revendication 2,
**caractérisée en ce que** la bande intermédiaire est une bande tissée dont les fils de chaîne (12) sont disposés dans la direction d'enroulement (e) de ladite bande intermédiaire (11) dont les fils de trame (13) constituent les fils transverses et sont disposés dans une direction (e') transverse à ladite direction (e).

4. Conduite flexible selon la revendication 3, **caractérisée en ce que** les fils de chaîne (12) sont constitués par des mèches filamentaires, le module d'élasticité de chaque mèche filamentaire étant inférieur ou égal à 10 000 MPa et dont le grammage est compris entre 50 et 100 g/m².

5. Conduite flexible selon la revendication 3, **caractérisée en ce que** les fils de trame (13) sont constitués par des mèches filamentaires dont le module d'élasticité est supérieur ou égal à 50 000 MPa et dont le grammage est compris entre 100 et 300 g/m².

6. Conduite flexible selon l'une des revendications 2 à 5, **caractérisée en ce que** la charge à la rupture de la bande intermédiaire dans le sens des fils de chaîne (12) est compris entre 100 et 300 DaN/5 cm.

7. Conduite flexible selon l'une des revendications 2 à 6, **caractérisée en ce que** la bande intermédiaire (11) comprend plus de fils transverses que de fils longitudinaux.

8. Conduite flexible selon l'une des revendications 2 à 7, **caractérisée en ce que** chaque fil de chaîne (12) est un fil torsadé.

9. Conduite flexible selon l'une des revendications 2 à 7, **caractérisée en ce que** les fils de trame (13) sont non torsadés.

10. Conduite flexible selon l'une des revendications 1 à 9, **caractérisée en ce que** l'enroulement de la bande intermédiaire (11) est effectué autour de la gaine d'étanchéité interne suivant une hélice et sous un angle au plus égal à 90° et, de préférence, compris entre 80 et 85°.

11. Conduite flexible selon l'une des revendications 1 à 10, **caractérisée en ce que** la bande intermédiaire (11) est enroulée avec recouvrement, le taux de recouvrement étant supérieur à 10 % et de préférence égal à 50 % .

12. Conduite flexible selon l'une des revendications 2 à 11, **caractérisée en ce que** les fils de chaîne (12) sont en matière plastique telles que du polypropylène, du polyéthylène ou du polyester.

13. Conduite flexible selon l'une des revendications 2 à 12, **caractérisée en ce que** les fils de trame (13) sont choisis dans les matières comprenant un polyamide, le carbone, le titane.

14. Conduite flexible selon l'une des revendications précédentes, **caractérisée en ce que** la bande intermédiaire (11) est enroulée autour de la gaine d'étanchéité interne (1) suivant une direction contraire à la direction d'enroulement (e) des spires (7, 8).

15. Conduite flexible selon la revendication 2,
**caractérisée en ce que** la bande intermédiaire (11) comprend des fils de chaîne (12) longitudinaux et des fils de trame (13) inclinés d'un angle d'environ 55° par rapport aux fils de chaîne (12).

16. Conduite flexible selon l'une des revendications précédentes, **caractérisée en ce qu'**elle comprend au moins deux bandes intermédiaires enroulées autour de la gaine d'étanchéité interne.

17. Conduite flexible selon la revendication 16,
**caractérisée en ce que** les directions d'enroulement des bandes intermédiaires sont inverses.

18. Conduite flexible selon l'une des revendications précédentes, **caractérisée en ce que** la largeur de la bande intermédiaire (11) est au moins égale à deux fois l'espacement (9) des spires (7,8) de l'armure consécutive (2) à la gaine d'étanchéité interne.

19. Conduite flexible selon l'une des revendications précédentes, **caractérisée en ce que** la bande intermédiaire (11) est un tricot.

## Patentansprüche

1. Flexible Rohrleitung, die für den Transport von Fluiden verwendbar ist und von dem Typ ist, der wenigstens umfaßt: eine innere Dichtungshülle (1); eine Gesamtheit (3) äußerer Bewehrungen, die physikalisch-chemischen Beanspruchungen, die auf die flexible Rohrleitung ausgeübt werden, widerstehen, wobei die Gesamtheit insbesondere eine Bewehrung (2) umfaßt, die dem Druck des zu transportierenden Fluids widersteht, wobei die druckbeständige Bewehrung (2) aus einer Wicklung aus nicht aneinanderstoßenden Windungen (7, 8) in einer gegebenen Richtung (e) um die innere Dichtungshülle (1) gebildet ist; ein Zwischenband (11), das zwischen der druckbeständigen Bewehrung (2) und der inneren Dichtungshülle (1) angeordnet ist und um die innere Dichtungshülle in einer Richtung parallel oder entgegengesetzt zur Wicklungsrichtung (e) der Windungen der druckbeständigen Bewehrung gewickelt ist, **dadurch gekennzeichnet, daß** das Zwischenband (11) einen geringen Elastizitätsmodul in der Wicklungsrichtung (e) um die innere Dichtungshülle und einen hohen Widerstand und einen hohen Elastizitätsmodul in der Richtung (e') quer zur Wicklungsrichtung der Windungen aufweist.

2. Flexible Rohrleitung nach Anspruch 1, **dadurch gekennzeichnet, daß** das Zwischenband (11) aus einer Verflechtung von Fäden (12, 13) gebildet ist, wovon bestimmte (12) in Längsrichtung verlaufen und in Wicklungsrichtung (e) des Bandes angeordnet sind, während die quer verlaufenden Fäden (13) eine starke mechanische Beständigkeit höher als 1000 DaN/cm besitzen.

3. Flexible Rohrleitung nach Anspruch 2, **dadurch gekennzeichnet, daß** das Zwischenband ein gewebtes Band ist, dessen Kettfäden (12) in Wicklungsrichtung (e) des Zwischenbandes (11) angeordnet sind und dessen Schußfäden (13) die Querfäden bilden und in einer Richtung (e') quer zur Richtung (e) angeordnet sind.

4. Flexible Rohrleitung nach Anspruch 3, **dadurch gekennzeichnet, daß** die Kettfäden (12) aus Fadengarnen gebildet sind, wobei der Elastizitätsmodul jedes Fadengarns kleiner oder gleich 10000 MPa ist und seine Flächenmasse im Bereich von 50 bis 100 g/m² liegt.

5. Flexible Rohrleitung nach Anspruch 3, **dadurch gekennzeichnet, daß** die Schußfäden (13) aus Fadengarnen gebildet sind, deren Elastizitätsmodul größer oder gleich 50000 MPa beträgt und deren Flächenmasse im Bereich von 100 bis 300 g/m² liegt.

6. Flexible Rohrleitung nach einem der Ansprüche 2 bis 5, **dadurch gekennzeichnet, daß** die Reißlast für das Zwischenband in Richtung der Kettfäden (12) im Bereich von 100 bis 300 DaN/5 cm liegt.

7. Flexible Rohrleitung nach einem der Ansprüche 2 bis 6, **dadurch gekennzeichnet, daß** das Zwischenband (11) mehr Querfäden als Längsfäden besitzt.

8. Flexible Rohrleitung nach einem der Ansprüche 2 bis 7, **dadurch gekennzeichnet, daß** jeder Kettfaden (12) ein verdrillter Faden ist.

9. Flexible Rohrleitung nach einem der Ansprüche 2 bis 7, **dadurch gekennzeichnet, daß** die Schußfäden (13) nicht verdrillt sind.

10. Flexible Rohrleitung nach einem der Ansprüche 1 bis 9, **dadurch gekennzeichnet, daß** die Wicklung des Zwischenbandes (11) um die innere Dichtungshülle längs einer Schraubenlinie und unter einem Winkel, der höchstens gleich 90° ist und vorzugsweise im Bereich von 80 bis 85° liegt, erfolgt.

11. Flexible Rohrleitung nach einem der Ansprüche 1 bis 10, **dadurch gekennzeichnet, daß** das Zwischenband (11) überlappend gewickelt wird, wobei der Überlappungsanteil größer als 10 % und vorzugsweise gleich 50 % ist.

12. Flexible Rohrleitung nach einem der Ansprüche 2 bis 11, **dadurch gekennzeichnet, daß** die Kettfäden (12) aus Kunststoff wie etwa Polypropylen, Polyethylen oder Polyester hergestellt sind.

13. Flexible Rohrleitung nach einem der Ansprüche 2 bis 12, **dadurch gekennzeichnet, daß** die Schußfäden (13) aus Werkstoffen gewählt sind, die Polyamid, Kohlenstoff und Titan umfassen.

14. Flexible Rohrleitung nach einem der vorhergehenden Ansprüche, **dadurch gekennzeichnet, daß** das Zwischenband (11) um die innere Dichtungshülle (1) in einer Richtung entgegengesetzt zur Wicklungsrichtung (e) der Windungen (7, 8) gewickelt ist.

15. Flexible Rohrleitung nach Anspruch 2, **dadurch gekennzeichnet, daß** das Zwischenband (11) in Längsrichtung verlaufende Kettfäden (12) und Schußfäden (13), die um einen Winkel von ungefähr 55° in bezug auf die Kettfäden (12) geneigt sind, umfaßt.

16. Flexible Rohrleitung nach einem der vorhergehenden Ansprüche, **dadurch gekennzeichnet, daß** sie wenigstens zwei Zwischenbänder umfaßt, die um die innere Dichtungshülle gewickelt sind.

17. Flexible Rohrleitung nach Anspruch 16, **dadurch gekennzeichnet, daß** die Wicklungsrichtungen der Zwischenbänder entgegengesetzt sind.

18. Flexible Rohrleitung nach einem der vorhergehenden Ansprüche, **dadurch gekennzeichnet, daß** die Breite des Zwischenbandes (11) wenigstens gleich dem doppelten Abstand (9) der Windungen (7, 8) der auf die innere Dichtungshülle folgenden Bewehrung (2) ist.

19. Flexible Rohrleitung nach einem der vorhergehenden Ansprüche, **dadurch gekennzeichnet, daß** das Zwischenband (11) ein Gestrick ist.

## Claims

1. Flexible pipe that can be used for conveying fluids, of the type comprising at least one internal sheath (1); an assembly (3) of external armor layers for withstanding physico-chemical stresses applied to the said flexible pipe, the said assembly particularly comprising a pressure armor layer (2) resistant to the pressure of the fluid to be conveyed, the said pressure-resistant armor layer (2) consisting of non-contiguous coils (7,8) wound around the said sealing internal sheath (1) in a predetermined direction (e); an intermediate strip (11) arranged between the pressure-resistant armor layer (2) and the sealing internal sheath (1) and wound around the said sealing internal sheath in a direction parallel or opposite to the direction (e) in which the coils of the pressure-resistant armor layer are wound, **characterized in that** the intermediate strip (11) has a low modulus of stiffness in the direction (e) of winding around the said sealing internal sheath and a high strength and modulus of stiffness in the direction (e') transverse to the said coil-winding direction.

2. Flexible pipe according to Claim 1, **characterized in that** the intermediate strip (11) consists of crossed filaments (12, 13) some (12) of which are longitudinal and arranged in the direction of winding (e) of the said strip, the transverse filaments (13) having a high mechanical strength exceeding 1000 daN/cm.

3. Flexible pipe according to Claim 2, **characterized in that** the intermediate strip is a woven strip in which the warp filaments (12) are arranged in the direction of winding (e) of the said intermediate strip (11), and the weft filaments (13) of which constitute the transverse filaments and are arranged in a direction (e') which is transverse with respect to the said direction (e).

4. Flexible pipe according to Claim 3, **characterized in that** the warp filaments (12) consist of filamentary rovings, the Young's modulus of each filamentary roving being less than or equal to 10,000 MPa, and the grammage of which is between 50 and 100 g/m².

5. Flexible pipe according to Claim 3, **characterized in that** the weft filaments (13) consist of filamentary rovings the Young's modulus of which is greater than or equal to 50,000 MPa, and the grammage of which is between 100 and 300 g/m².

6. Flexible pipe according to one of Claims 2 to 5, **characterized in that** the rupture load of the intermediate strip in the direction of the warp filaments (12) is between 100 and 300 daN/5 cm.

7. Flexible pipe according to one of Claims 2 to 6, **characterized in that** the intermediate strip (11) comprises more transverse filaments than longitudinal filaments.

8. Flexible pipe according to one of Claims 2 to 7, **characterized in that** each warp filament (12) is a twisted filament.

9. Flexible pipe according to one of Claims 2 to 7, **characterized in that** the weft filaments (13) are untwisted.

10. Flexible pipe according to one of Claims 1 to 9, **characterized in that** the intermediate strip (11) is wound around the sealing internal sheath in a helix and at an angle at most equal to 90°, and preferably of between 80 and 85°.

11. Flexible pipe according to one of Claims 1 to 10, **characterized in that** the intermediate strip (11) is wound with an overlap, the degree of overlapping being greater than 10% and preferably equal to 50%.

12. Flexible pipe according to one of Claims 2 to 11, **characterized in that** the warp filaments (12) are made of plastic such as polypropylene, polyethylene or polyester.

13. Flexible pipe according to one of Claims 2 to 12, **characterized in that** the weft filaments (13) are chosen from materials including a polyamide, carbon, titanium.

14. Flexible pipe according to one of the preceding claims, **characterized in that** the intermediate strip (11) is wound around the sealing internal sheath (1) in the opposite direction to the direction of winding (e) of the coils (7, 8).

15. Flexible pipe according to Claim 2, **characterized in that** the intermediate strip (11) comprises longitudinal warp filaments (12) and weft filaments (13) that are inclined by an angle of about 55° with respect to the warp filaments (12).

16. Flexible pipe according to one of the preceding claims, **characterized in that** it comprises at least two intermediate strips wound around the sealing internal sheath.

17. Flexible pipe according to Claim 16, **characterized in that** the intermediate strips are wound in opposition directions.

18. Flexible pipe according to one of the preceding claims, **characterized in that** the width of the intermediate strip (11) is equal to at least twice the spacing (9) between coils (7,8) of the pressure armor layer (2) next to the sealing internal sheath.

19. Flexible pipe according to one of the preceding claims, **characterized in that** the intermediate strip (11) is a knit.
